**Europäisches Patentamt**

**European Patent Office**

**Office européen des brevets**

(11) Publication number: **0 479 295 B1**

# EUROPEAN PATENT SPECIFICATION

(45) Date of publication of patent specification: **26.07.95** (51) Int. Cl.⁶: **B41M 7/02**, B41M 5/40, B32B 27/08

(21) Application number: **91116879.7**

(22) Date of filing: **02.10.91**

The file contains technical information submitted after the application was filed and not included in this specification

(54) **Laminate sheet and card.**

(30) Priority: **04.10.90 JP 265109/90**

(43) Date of publication of application:
**08.04.92 Bulletin 92/15**

(45) Publication of the grant of the patent:
**26.07.95 Bulletin 95/30**

(84) Designated Contracting States:
**DE FR GB**

(56) References cited:
**EP-A- 0 103 024
EP-A- 0 178 332
WO-A-90/08661
US-A- 4 780 348**

(73) Proprietor: **DAI NIPPON PRINTING CO., LTD.
1-1, Ichigaya-Kaga-Cho 1-chome
Shinjuku-ku
Tokyo 162-01 (JP)**

(72) Inventor: **Hiroi, Junichi, c/o Dai Nippon Printing Co., Ltd.
1-1, Ichigaya-Kaga-Cho 1-Chome
Shinjuku-Ku,
Tokyo-To (JP)**

(74) Representative: **Müller-Boré & Partner Patentanwälte
Postfach 26 02 47
D-80059 München (DE)**

## Description

The present invention relates to a card capable of imparting an improved bending-resisting property and image durability to a thermally transferred image.

In the conventional technology, various printed letters or the like and images have been widely formed by thermal transfer methods.

These thermal transfer methods are approximately classified into two types, one being a so-called wax-type (heat-fusion type) in which a thermal transfer layer is softened by heating and thermally transferred to a material on which an image is being transferred and the other being a so-called sublimation type in which a dye in a thermal transfer layer is sublimed (heat transfer) and only the dye is thermally transferred to a material on which an image is being transferred.

In both types, a print image to be formed is merely caused to adhere or dyed on the surface of a thermal transfer image sheet, so that the image durability such as anti-friction property and an anti-solvent property of the print image is inferior, and when the image sheet contacts another article, colors of the transfer sheet may be transferred, thus damaging the surface of the article.

In order to solve such problems, the prior art further provides a transfer method in which a transparent sheet provided with a bonding layer is preliminarily laminated on the image surface of the print image to be thermally transferred, for example, as disclosed in Japanese Patent Laid-Open Specification No. 1-237193.

However, in the case where such laminate sheet of conventional art is applied to cards such as identification cards and the like which are required to be prevented from being counterfeited or falsified by forcibly peeling of the laminate sheet, there is a possibility of the laminate sheet being peeled off without damaging the transferred image on the card, and it becomes possible to falsify or deform the card. Accordingly, in order to obviate such possibility, it is necessary to strongly bond the laminate sheet to the card to the extent that the transferred image will be damaged if the laminate sheet is forcibly peeled off.

Furthermore, since such cards are usually subjected to severe and repeated handling, it is also necessary for such cards to have improved flexibility and bending-resisting property. However, in the conventional laminate sheet card, there is a possibility of the bonded layer being locally peeled off with repeated use in a bent manner, and an opaque portion may be formed in the card, resulting in the degradation of the image on the card. These problems are conspicuous in pouch-cards in which the laminate sheet covers the peripheral portion of the card as well as both sides of the image, and an overlap width portion is also bonded thereby to entirely wrap the image and a flash-cut type card in which the overlap width portion of the pouch-card is cut.

Still further, in the case where an image to be protected on the card is of a sublimation transfer type image, it is necessary to prevent bleeding of the dye image due to the formation of the bonding layer.

Accordingly, an object of the present invention is to substantially eliminate the defects or drawbacks encountered in the prior art technology described above and to provide a card capable of imparting, to a thermally transferred image, superior bonding strength, bending-resisting property, image durability and the like.

This and other objects can be achieved by a card according to claim 1.

In a preferred embodiment, the first bonding layer is formed of one of polyethylene resin, ionomer resin, polyamide resin and polypropylene resin, and the second bonding layer is formed of one of polyamide resin and vinyl chloride/vinyl acetate copolymer.

A pouch-card and a flash-card may be prepared by utilizing the card of the structure described in claim 1.

According to the card of the present invention of the structure described in claim 1, a bonding layer is constructed as a two-layer structure including the first and second bonding layers. The first bonding layer contacting the base sheet has a relatively thick thickness for imparting a cushioning property, and the second bonding layer contacting the thermally transferred image has a relatively thin thickness having a high bonding strength, whereby superior bonding strength, bending-resisting property and image durability can be imparted to the thermally transferred image formed on the sheet material.

For a better understanding of the present invention and to show how the same is carried out, reference is first made, by way of preferred embodiments, to the accompanying drawings, in which:

Fig. 1 is an illustrated sectional view of a laminate sheet;

Fig. 2 is an illustrated sectional view of a multilayer structure; and

Figs. 3 to 4 are illustrated sectional views of examples of cards according to the present invention.

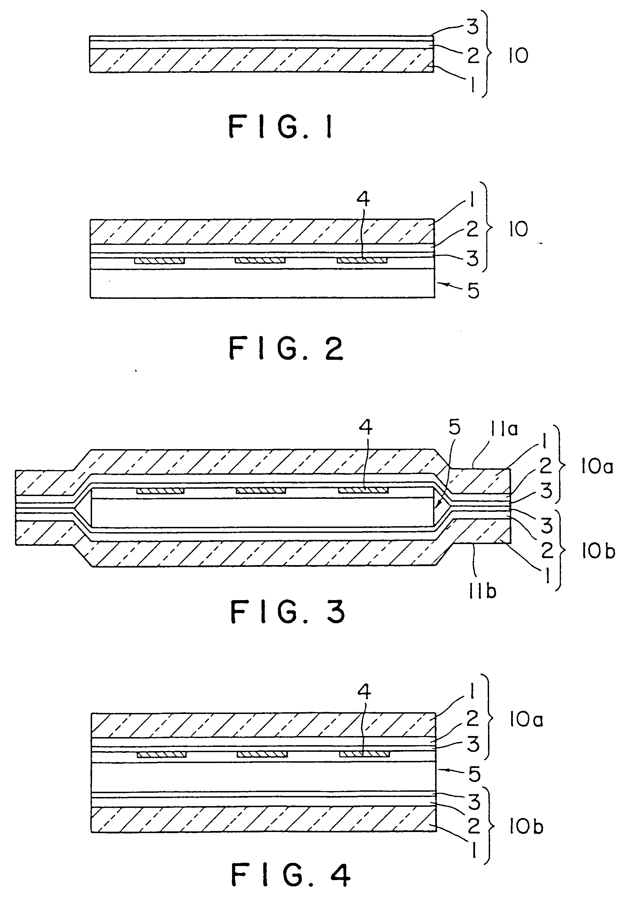

Fig. 1 is a sectional view of a laminate sheet 10, in which a first bonding layer 2 is laminated on a transparent base material 1, and a second bonding layer 3 is further laminated on the first bonding layer 2. Although it may be said that the first and second layers 2 and 3 should be referred to as bonding layers before bonding and as bonded layers after bonding, these layers 2 and 3 are referred to as bonding layers 2 and 3 herein for avoiding confusion.

For the transparent sheet 1 as the base of the laminated sheet of this example, it is minimally necessary to have a transparency to the extent that a thermally transferred image as a ground is visual through the transparent sheet 1, and accordingly, in this meaning, it may be possible to effect coloring or frosting treatment. Actually, a colored or uncolored transparent or translucent sheet or film formed of a material such as polyethylene, polypropylene, polyvinylidene chloride, polyvinyl alcohol, polyester, polycarbonate, polyamide, polystyrene, ethylene/vinyl acetate copolymer, ethylene/vinyl alcohol copolymer, or ionomer may be utilized. In the case where mechanical strength, transparency, bending property, heat resisting property and the like are specifically considered, the use of the polyester, polycarbonate or polyamide film may be preferred, and more particularly, the use of polyethylene terephthalate and polyethylene naphthalate may be more preferable. It is of course possible to preliminarily add such additives as an ultraviolet-ray absorbent, antioxidant, light-stabilizer and the like. It is also desired that the sheet or film have a thickness of ordinarily 25 to 200 $\mu$m or preferably 75 to 125 $\mu$m.

For the first bonding layer 2, it is required to have characteristics or properties for increasing strong adhesion to the image surface at the time of bonding, for being softened at the time of heat lamination for acquiring adhesive property to the image to be protected, and for acquiring mechanical strength and cushioning property against tearing and pulling. As a resin for acquiring such characteristics or properties, a resin having a high molecular weight is desired. Moreover, because it is necessary for the first bonding layer to have a relatively thick thickness, it is further desirable to use a resin material capable of being worked in the absence of a solvent, for example, capable of being subjected to a coating based on fusion-extrusion and coextrusion working at the time of forming the transparent base material. As resin materials having such properties, colored or uncolored transparent or translucent polyethylene, polypropylene, polyamide, ionomer, polycarbonate, ABS resin, AS resin, MBS resin, polyester, polystyrene, and polybutylene can be used. Of these, polyethylene, ionomer, polyamide or polypropylene resin are preferable.

It is desirable that the first bonding layer 2 has a thickness of 5 to 70%, preferably 5 to 50%, of the thickness of the base film. The first bonding layer 2 is formed in the absence of a solvent but formed by a known coating method utilizing a solvent such as a roll coating, die coating, knife coating or gravure coating method.

For the second bonding layer 3, a thickness of 1 to 50%, preferably 4 to 40%, of the total thickness of the bonding layers is desirable. Specifically, a thickness of 15 to 25 $\mu$m is desirable for the second bonding layer 3.

Furthermore, it is desirable for the second bonding layer 3 to add a solid slipping agent and a filler formed of a material such as microsilica, talc, clay, calcium carbonate, barium sulfate or fluororesin powder in an amount which will not damage the transparency for preventing blocking during manufacturing and storing and preventing air bubbles from being entrapped at the time of bonding the second layer 3 to the image surface. For example, it is desirable to add such solid slipping agent or filler in a quantity of 0.01 to 20 weight parts with respect to 100 weight parts of resin.

In the above example, it is desirable that the total thickness of the first and second bonding layers 2 and 3 be 10 to 50% with respect to the total thickness of the laminated sheet 10, and more specifically, that the thickness be about 3.5 5o 90 $\mu$m.

An object to which the laminate sheet 10 used according to the present invention is applied is not specifically limited. It can be applied to a sublimation type transferred image, a heat-fusion type transferred image, or a combination image of these types, or images formed by other methods.

Fig. 2 shows one example of a multilayer structure which is formed by utilizing the laminate sheet 10 of the character described above. In the actual formation, the structure of Fig. 2 is formed by laminating the laminate sheet 10 to an image surface of a thermal transfer image sheet (sheet material) 5, on which a thermally transferred image 4 (print image) is formed, through the first and second bonding layers 2 and 3. According to the structure prepared by such a method, not only can the durability to the print image 4 be improved, but also the first bonding layer 2 can attain a sufficient cushioning property when the structure is bent, thereby preventing the bonding layers and the image surface from being separated as well as generation of white turbidity and folded lines. Moreover, the bonding strength between the image surface and the bonded layer is increased by the synergism of the bonding layers 2 and 3. The print image 4 is damaged when an attempt is made to forcibly peel off the laminate sheet 10, thus preventing falsification and deformation of the image.

Fig. 3 shows a sectional view of a card according to the present invention. In this illustrated example, a first laminate sheet 10a is bonded to an image surface, on which a thermally transferred image is formed. A thermal transfer sheet 5 and a second laminate sheet 10b is bonded to the other surface thereof. These first and second laminate sheets 10a and 10b each have substantially the same structure as that of the laminate sheet 10 of the aforedescribed example. Furthermore, these laminate sheets 10a and 10b are extended outward from the thermal transfer sheet 5, and the second bonding layers 3 and 3 of both the laminate sheets 10a and 10b are bonded to each other at the outward portions of the thermal transfer sheet 5 as shown in Fig. 3 to thereby envelop the same within the laminate sheets 10a and 10b, thus forming a pouch-card. The thus formed pouch-card is particularly preferred for a card used under severe and repeated bending conditions. That is, although a large stress is applied, by repeated bending handling, to the image surface and the outer portions 11a and 11b (overlapped portion) of the thermal transfer sheet 5 formed of the first and second laminate sheets 10a and 10b, the stress can be absorbed by the cushioning property of the first bonding layers 2 and 2, thus preventing the overlapped portions 11a and 11b from being peeled off.

Fig. 4 shows a further example of a card according to the present invention. In this example, the card is formed as a flash-cut type card by cutting the overlapped portions 11a and 11b of the thermal transfer sheet 5 formed of the first and second laminate sheets 10a and 10b shown in Fig. 3. In this example, the first and second laminate sheets 10a and 10b can be prevented from being peeled off at the cut portions.

In the foregoing disclosure, the present invention is described by way of preferred examples.

The cards of the present invention may be cards of various types, such as student certification cards, employee cards, certification cards for government and municipal officers, membership cards, or other cards for certifying nationalities, addresses, dates of birth, firm names, government offices, responsibilities, and various rights, which are per se known. It is of course possible to utilize these laminate sheets for various printing materials requiring high durability other than the certificate cards of the types described above to provide cards of the present invention.

The laminate sheets used in the cards of the present invention will be described in further detail hereunder with reference to specific examples and comparative examples.

(Examples 1 to 7)

In Examples 1 to 3, 6 and 7, a polyethylene-terephthalate film having a thickness of 100 $\mu$m was utilized as a base film, and in Examples 4 and 5, a polyethylene-terephthalate film having a surface subjected to a mild adhesion treatment and having a thickness of 125 $\mu$m was utilized as a base film.

In the thus-prepared laminate sheets, in Examples 1 and 2, the first bonding layers were formed of a polyethylene resin and in Examples 3 to 7, the first bonding layers were formed of an ionomer resin (Himilan® 1652 manufactured by MITSUI Dupont Chemical K.K.) by an extrusion-coating method. The surfaces of the first bonding layers of Examples 2 to 5 and 7 were subjected to a corona discharge treatment.

In the next step, with respect to all of the examples, a solution of a polyamide resin (FS-175® manufactured by TOA GOSEI KAGAKU KOGYO K.K.) applied as a coating by using a wire bar #30 so as to provide a coating having a thickness of 5 $\mu$m, which was then dried. Thereafter, the thus-obtained sheet materials were kept in an oven at a temperature of 80°C for forming the second bonding layers, thus preparing laminate sheets used in the cards according to the present invention.

(Comparative Example 1)

In this example, a bonding layer having a thickness of 5 $\mu$m and formed of the polyamide resin utilized in the examples of the present invention was applied directly on the base film.

(Comparative Example 2)

A commercially sold laminate film manufactured by MEIKO SHOKAI K.K. was utilized.

For the comparison, pouch-cards according to the present invention were prepared by utilizing the laminate sheets formed in accordance with Examples 1 to 7 and the Comparative Examples 1 and 2 in a manner such that the thus prepared laminate sheets were overlapped on both surfaces of image receiving papers on which sublimation transfer images were formed, and the bonded surfaces of the overlapped sheets were heated to 105°C for a heating time of 4 s. The following Table 1 shows the structures of the thus obtained laminate sheets and evaluations of the results.

## TABLE 1

| | Thickness of Base | First Bonding Layer | Second Bonding Layer | Surface Treatmemt | Bending | Forcible Peeling | Retention of Heat Resistance |
|---|---|---|---|---|---|---|---|
| Example 1 | 100 μm | Polyethylene 25 μm | Polyamide 5 μm | not treated | ○ | △~○ | 4 |
| Example 2 | 100 μm | Polyethylene 25 μm | Polyamide 5 μm | Corona Discharge | ○ | △~○ | 4 |
| Example 3 | 100 μm | Ionomer 25 μm | Polyamide 5 μm | Corona Discharge | ○ | ○ | 4 |
| Example 4 | 125 μm | Ionomer 25 μm | Polyamide 5 μm | Corona Discharge | ○ | ○ | 4 |
| Example 5 | 125 μm | Ionomer 50 μm | Polyamide 5 μm | Corona Discharge | ○ | ○ | 4 |
| Example 6 | 100 μm | Ionomer 50 μm | Polyamide 5 μm | not treated | ○ | ○ | 4 |
| Example 7 | 100 μm | Ionomer 50 μm | Polyamide 5 μm | Corona Discharge | ○ | ○ | 4 |
| Comparative Example 1 | 188 μm | -- | Polyamide 5 μm | -- | △ | × | 5 |
| Comparative Example 2 | 150 μm | -- | -- | -- | △ | × | 2 |
| Total Thickness | | | | | | | |

With reference to the above Table 1:

Bending:

Bending test carried out by hand after lamination
Bent twenty times widthwise and lengthwise directions, respectively, and examined for extents of

5

peeling.

○        Not peeled.

△        Partially peeled.

X        Completely peeled.

Peeling Strength:

Peeling condition in the case where bonded surfaces at overlapped portions were forcibly peeled was examined.

○        Base was broken.

△        Peeling resistance was high, but peeling was observed at the bonded surfaces.

X        Easily peeled at the bonded surface.

Retention of Heat Resistance:

Bleedings of images were visually observed at five evaluation stages after preservation for 72 hours at 60°C.

5: No bleeding; 1: severely bleeding

(2 to 4 intermediate)

As can be understood from the above Table 1, in the example in which the bonding layer is of two-layer structure and the total thickness of the layers is 5 to 70% of the sheet thickness, the bonding strength was high, and in case of the utilization of the polyamide resin as the second bonding layer, less bleeding was observed, thus being advantageous.

(Examples 8 to 14)

A polyethylene-terephthalate film which is easily subjected to a bonding treatment and has a thickness of 100 $\mu$m was prepared as the base film, and the first bonding layer was formed of ionomer resin (Himilan® 1652) by the extrusion coating method to a thickness of 50 $\mu$m.

In all examples, a polyamide resin solution (FS-175®) to which fillers of the following Table 2 were added was coated by utilizing a wire bar #30 to a coated film thickness of 5 $\mu$m, which was then dried and kept for ten minutes in an oven at a temperature of 80°C to thereby form the second bonding layer, thus preparing the laminate sheets of the examples used in the cards according to the present invention.

With reference to the laminate sheets thus prepared, haze values (JIS K6714, ASTM D1003-61) were measured and blocking tests were carried out. For comparison, pouch-cards were prepared by utilizing the laminate sheets formed in accordance with Examples 8 to 14 in a manner such that the thus prepared laminate sheets were overlapped on both surfaces of image receiving papers on which sublimation transfer images were formed. The bonding surfaces of the overlapped sheets were heated to 105°C for a heating time of 4 s. The following Table 2 shows the evaluation results of the thus obtained laminate structures.

TABLE 2

|  | Filler | Added Amount (wt%) | Haze (wt%) | Bending Tests | Blocking Tests |
|---|---|---|---|---|---|
| Example 8 | Aerosil® R972 | 16.7 | 27.6 | ○ | ○ |
| Example 9 | Aerosil® R972 | 9.1 | 14.1 | ○ | ○ |
| Example 10 | Aerosil® R972 | 2.4 | 14.5 | ○ | ○ |
| Example 11 | OK412® | 23.1 | 84.4 | X | ○ |
| Example 12 | OK412® | 9.1 | 73.1 | ○ | ○ |
| Example 13 | OK412® | 4.8 | 46.4 | ○ | ○ |
| Example 14 | -- | -- | 14.1 | ○ | X |

Blocking Tests:
Load of 1.5 bar (1.5 Kg/cm$^2$) was applied under steady state, kept for 72 hours, and bonded conditions were observed.
○ absence of blocking
X presence of blocking

(Examples 15 to 18)

A polyethylene terephthalate film which was easily subjected to a bonding treatment and had a thickness of 100 $\mu$m was prepared as the base film. The first bonding layer was formed of ionomer resin (Himilan® 1652) by the extrusion-coating method to a thickness of 50 $\mu$m.

In all examples, a polyamide resin solution (FS-175®) was applied as a coating by utilizing a wire bar #30 to a coated film thickness of 5 $\mu$m, which was then dried and kept for 10 minutes in an oven at temperature of 80°C to thereby form the second bonding layer, thus preparing the laminate sheet A of the examples used according to the present invention.

Likewise, a vinyl chloride/vinyl acetate copolymer resin solution (BLS-4266®, manufactured by TOYO MORTON K.K.) was applied as a coating on a base film provided with an ionomer layer by utilizing a wire bar #20 so as to form a coating film of a thickness of 5 $\mu$m, which was then dried, thus preparing a laminate sheet B.

Flash-cards of the present inventions were prepared by utilizing such two laminate sheets A and B in a manner such that dye receiving layers were provided on the surfaces of plastic films, and these laminate sheets were overlapped to both surfaces of image-receiving papers on which sublimation transfer images were formed. Thereafter, the laminating treatments were carried out with a heating temperature of 105°C for a heating time of 4 s. The following Table 3 shows the structures of the respective laminations and the evaluation results of the thus-obtained laminate structures.

TABLE 3

|  | Laminate Sheet | | Bending | | Peeling Strength | |
|---|---|---|---|---|---|---|
|  | Front Surface | Rear Surface | Front Surface | Rear Surface | Front Surface | Rear Surface |
| Example 15 | Laminate Sheet A | Laminate Sheet A | ○ | ○ | ○ | X |
| Example 16 | Laminate Sheet A | Laminate Sheet B | ○ | ○ | ○ | ○ |
| Example 17 | Laminate Sheet B | Laminate Sheet A | ○ | ○ | △~○ | X |
| Example 18 | Laminate Sheet B | Laminate Sheet B | ○ | ○ | △~○ | ○ |

As shown in the above Table 3, in the case where the laminate sheets are laminated on both surfaces of the image, it will be found that it is desirable to select the second bonding layer in accordance with the characteristics of the surfaces to be bonded.

As described above a laminate sheet used according to the present invention having a bonding strength superior to that of the thermally transferred image and having a bending-resisting property against repeated bending and an improved image durability can be provided by constructing the bonding layer as a two-layer structure in which the first bonding layer contacting the sheet is made thicker so as to have a cushioning property, and the second bonding layer contacting the image surface has a thin thickness having a high bonding strength.

**Claims**

1. A card comprising: a sheet material (5) having a thermally transferred image (4) formed on at least one of two surfaces thereof
   a first laminate sheet (10a) provided on one surface of the sheet material (5),
   and a second laminate sheet (10b) provided on the other surface of the sheet material (5),
   each laminate sheet (10a, 10b) comprising a base material (1) having one surface exposed outward, a first bonding layer (2) laminated on the base material (1) and having one surface contacting the other surface of the base material (1), and a second bonding layer (3) laminated on the first bonding layer (2) and having one surface contacting the other surface of the first bonding layer (2) and the other surface contacting one surface of the sheet material (5).

2. A card according to claim 1, wherein said base material (1) comprises a base film having transparency to an extent through which the thermally transferred image can be observed.

3. A card according to claim 2, wherein the base material (1) is formed of one of a polyester film, a polycarbonate film and a polyamide film.

4. A card according to claim 1, wherein said first bonding layer (2) is formed of one of a polyethylene resin, ionomer resin, polyamide resin and polypropylene resin, and said second bonding layer (3) is formed of one of a polyamide resin and vinyl chloride/vinyl acetate copolymer.

5. A card according to claim 1, wherein said second bonding layer (3) contains a filler.

6. A card according to claim 1, wherein a bonding layer formed of the first and second bonding layers (2, 3) has a thickness of 10 to 50% of the total thickness of the laminate sheet (10a, 10b).

7. A card according to claim 1, wherein said second bonding layer (3) has a thickness of 4 to 40% of the total thickness of a bonding layer formed of the first and second bonding layers (2, 3).

8. A card according to claim 1, wherein the thermally transferred image (4) is of a sublimation type thermally transferred image or a heat-fusion type thermally transferred image.

9. A card according to claim 1, wherein said first and second laminate sheets (10a, 10b) extend outward from both ends of the sheet material (5) and second bonding layers (3) of the first and second laminate sheets (10a, 10b) are bonded together at the extended ends thereof.

10. A card according to claim 1, wherein the card is a flash-card formed by cutting off the extended portions of the first and second laminate sheets (10a, 10b).

11. A card according to claim 1, wherein the first bonding layer is provided by fusion extrusion.

12. A card according to claim 1, wherein said bonding layer (3) further comprises a filler in a quantity of 0.01 to 20 parts by weight per 100 parts by weight of the remaining components of said bonding layer (3).

**Patentansprüche**

1. Karte, umfassend:
   ein Blattmaterial (5) mit einem durch Wärme übertragenen Bild (4), das auf mindestens einer seiner beiden Oberflächen gebildet ist,
eine erste Laminatschicht (10a), die auf einer Oberfläche des Blattmaterials (5) angeordnet ist,
und eine zweite Laminatschicht (10b), die auf der anderen Oberfläche des Blattmaterials (5) angeordnet ist,
wobei jede Laminatschicht (10a, 10b) umfaßt:
ein Basismaterial (1), welches eine auswärts offenliegende Oberfläche aufweist, eine erste Bindeschicht (2), die auf das Basismaterial (1) laminiert ist und mit der anderen Oberfläche des Basismaterials (1) in Kontakt steht, und eine zweite Bindeschicht (3), die auf die erste Bindeschicht (2) laminiert ist und mit einer Oberfläche mit der anderen Oberfläche der ersten Bindeschicht (2) und mit der anderen Oberfläche mit einer Oberfläche des Blattmaterials (5) in Kontakt steht.

2. Karte nach Anspruch 1, wobei das Basismaterial (1) einen Basisfilm umfaßt, der in einem solchen Ausmaß transparent ist, daß das mit Wärme übertragene Bild durch ihn hindurch beobachtet werden kann.

3. Karte nach Anspruch 2, wobei das Basismaterial (1) aus einem von Polyesterfilm, Polycarbonatfilm und Polyamidfilm gebildet ist.

4. Karte nach Anspruch 1, wobei die erste Bindeschicht (2) aus einem von Polyethylenharz, Ionomerharz, Polyamidharz und Polypropylenharz gebildet ist, und die zweite Bindeschicht (3) aus einem von Polyamidharz und Vinylchlorid/Vinylacetat Copolymer gebildet ist.

5. Karte nach Anspruch 1, wobei die zweite Bindeschicht (3) einen Füllstoff enthält.

6. Karte nach Anspruch 1, wobei die aus der ersten und zweiten Bindeschicht (2, 3) gebildete Bindeschicht eine Dicke von 10 bis 50% der gesamten Dicke der Laminatschicht (10a, 10b) aufweist.

7. Karte nach Anspruch 1, wobei die zweite Bindeschicht (3) eine Dicke von 4 bis 40% der gesamten Dicke der aus der ersten und zweiten Bindeschicht (2, 3) gebildeten Bindeschicht aufweist.

8. Karte nach Anspruch 1, wobei das durch Wärme übertragene Bild (4) eines vom Sublimationstypus der durch Wärme übertragenen Bilder oder vom Heißschmelztypus der durch Wärme übertragenen Bilder ist.

9. Karte nach Anspruch 1, wobei die erste und die zweite Laminatschicht (10a, 10b) über beide Enden des Blattmaterials (5) hinausragen und die zweiten Bindeschichten (3) der ersten und der zweiten Laminatschicht (10a, 10b) an ihren hinausragenden Enden miteinander verbunden sind.

10. Karte nach Anspruch 1, wobei die Karte eine Identifizierungskarte (flash-card) ist, die durch Abschneiden der hinausragenden Teile der ersten und zweiten Laminatschicht (10a, 10b) gebildet ist.

11. Karte nach Anspruch 1, wobei die erste Bindeschicht durch Schmelzextrusion bereitgestellt ist.

12. Karte nach Anspruch 1, wobei die Bindeschicht (3) ferner einen Füllstoff in einer Menge von 0,01 bis 20 Gewichtsteilen pro 100 Gewichtsteile der übrigen Komponenten der Bindeschicht (3) umfaßt.

**Revendications**

1. Carte comprenant :
un matériau (5) en feuilles ayant une image (4) reportée thermiquement, formée sur l'une au moins de ses deux surfaces,
une première feuille stratifiée (10a) placée sur une première surface du matériau en feuilles (5), et
une seconde feuille stratifiée (10b) placée sur l'autre surface du matériau en feuilles (5),
chaque feuille stratifiée (10a, 10b) comprenant un matériau de base (1) ayant une surface exposée vers l'extérieur, une première couche de liaison (2) collée à la matière de base (1) et ayant une surface au contact de l'autre surface du matériau de base (1), et une seconde couche de liaison (3) collée à la première couche de liaison (2) et ayant une surface au contact de l'autre surface de la première couche de liaison (2) et l'autre surface au contact d'une première surface du matériau en feuilles (5).

9

**2.** Carte selon la revendication 1, dans laquelle le matériau de base (1) est un film de base ayant une transparence telle que l'image reportée thermiquement peut être observée à travers le film.

**3.** Carte selon la revendication 2, dans laquelle le matériau de base (1) est formé d'un film polyester, d'un film de polycarbonate ou d'un film de polyamide.

**4.** Carte selon la revendication 1, dans laquelle la première couche de liaison (2) est formée d'une résine de polyéthylène, d'une résine ionomère, d'une résine polyamide ou d'une résine de polypropylène, et la seconde couche de liaison (3) est formée d'une résine polyamide ou d'un copolymère de chlorure de vinyle et d'acétate de vinyle.

**5.** Carte selon la revendication 1, dans laquelle la seconde couche de liaison (3) contient une charge.

**6.** Carte selon la revendication 1, dans laquelle la couche de liaison formée de la première et de la seconde couche de liaison (2, 3) a une épaisseur de 10 à 50 % de l'épaisseur totale de la feuille stratifiée (10a, 10b).

**7.** Carte selon la revendication 1, dans laquelle la seconde couche de liaison (3) a une épaisseur comprise entre 4 et 40 % de l'épaisseur totale d'une couche de liaison formée de la première et de la seconde couche de liaison (2, 3).

**8.** Carte selon la revendication 1, dans laquelle l'image reportée thermiquement (4) est une image reportée thermiquement du type par sublimation ou une image reportée thermiquement du type formé par fusion par chauffage.

**9.** Carte selon la revendication 1, dans laquelle la première et la seconde feuille stratifiée (10a, 10b) sont dirigées vers l'extérieur des deux extrémités du matériau en feuilles (5) et les secondes couches de liaison (3) de la première et de la seconde feuille stratifiée (10a, 10b) sont collées à leurs extrémités prolongées.

**10.** Carte selon la revendication 1, dans laquelle la carte est une carte poinçonnée formée par découpe des parties de prolongement de la première et de la seconde feuille stratifiée (10a, 10b).

**11.** Carte selon la revendication 1, dans laquelle la première couche de liaison est formée par extrusion et fusion.

**12.** Carte selon la revendication 1, dans laquelle la couche de liaison (3) contient une charge en quantité comprise entre 0,01 et 20 parties en poids pour 100 parties en poids des ingrédients restants de la couche de liaison (3).

F I G. 1

F I G. 2

F I G. 3

F I G. 4